# EUROPEAN PATENT APPLICATION

(11) **EP 2 180 708 A1**
(43) Date of publication of application: **28.04.2010**
(21) Application number: 08167202.4
(22) Date of filing: 22.10.2008
(51) Int. Cl.: H04N 7/24, H04N 5/00, H04N 7/16

(54) **Method for streaming media playback and terminal device**

(71) Applicant: TELIASONERA AB, 10663 Stockholm (SE)
(72) Inventor: Leinonen, Antti, 36240, Kangasala (FI)
(74) Representative: Valkeiskangas, Tapio Lassi Paavali

(57) **Abstract**

A method for streaming media playback and a terminal device, the method comprising receiving a media data stream by a terminal device (30) via a wireless connection; buffering the received media data stream; playing back the buffered media data stream by the terminal device (30); and altering the speed of the playback of the buffered media data stream, wherein the altering of the speed of the playback of the buffered media data stream comprises slowing down the speed of the playback of the buffered media data stream a) in response to the wireless connection becoming unavailable to the terminal device (30), or b) in response to the signal strength of the wireless connection experienced by the terminal device (30) falling below a first predetermined threshold value.

## Description

### FIELD OF THE INVENTION

The invention relates to streaming media playback.

### BACKGROUND OF THE INVENTION

Streaming media, such as video and audio data, can be delivered to an end user by utilizing various networks. For example, video data can be streamed over a DVB-H (Digital Video Broadcasting - Handheld) broadcast network, or it may be delivered via a 3G (3rd Generation mobile communications) cellular network, for example. The coverage and usability of the networks varies and depends on several factors. For example, from a capacity point of view it might be advantageous to deliver e.g. popular live broadcasts by using a broadcast oriented network, such as the DVB-H. On the other hand, the indoor coverage of that particular network may not be adequate under certain circumstances.

There might be a situation when the user watches a broadcast outdoors and then moves indoors. Let us consider a situation where the user is watching a broadcast TV channel via the DVB-H in a city area. Then he/she walks in to an apartment house with thick walls. The DVB-H signal might be immediately unavailable. On the other hand, the same video feed might be available as a regular unicast stream via a 3G cellular network having better indoors coverage. The relevant question is whether the media playing client in the user's terminal device can begin to use the stream automatically. In the worst case the broadcast stream will just be stopped and the user has to manually initiate a 3G streaming session with the terminal device if he/she wants to continue to watch the stream also indoors.

The streaming session handover may also be automated, but in this case it is quite time sensitive; as soon as the terminal device looses the DVB-H stream, it has only some limited amount of previously loaded data in a data buffer. And while the video playing client is playing the buffered data, the terminal device should be able to initiate the 3G session and begin to load the data through the new connection.

Document US 6,665,751 discloses a solution for streaming media player varying its play speed in accordance with a buffer state. In the disclosed solution, the streaming media player slows down its playback rate if its buffer has less than a predetermined threshold of stored information in order to better handle a channel congestion situation with either no interruptions or fewer interruptions. A possible drawback related to the disclosed solution is that also under certain normal reception conditions the buffer data level may vary more or less such that the buffer is not always full of data. Under such circumstances the predetermined threshold of the stored information should be set low enough in order to prevent unnecessary slowing down of the media playback under normal reception conditions. However, in case the connection is lost altogether, the lower the predetermined threshold is set, the less time the terminal device has to establish a new connection or re-establish the previous connection before the buffer becomes completely empty. Thus, the disclosed solution might not be optimal in e.g. handover situations.

### BRIEF DESCRIPTION OF THE INVENTION

The object of the invention is thus to provide a method and apparatus implementing the method such that the above problem can be solved or at least alleviated. This is achieved by a method, a terminal device and a computer program product, which are characterized by what is stated in independent claims 1, 8 and 15. The preferred embodiments of the invention are disclosed in the dependent claims.

The invention is based on the idea of slowing down the speed of the playback of the buffered media data stream in response to a wireless connection becoming unavailable to a terminal device, or in response to a signal strength of the wireless connection experienced by the terminal equipment falling below a predetermined threshold value.

The method and the apparatus of the invention have an advantage that, for example, in a handover situation in which the terminal device needs to establish a new connection or re-establish the previous connection, the slowing down of the speed of the playback of the buffered media data stream can be started as soon as possible instead of, for instance, waiting that the buffer data level falls below a certain threshold, and thus the possibility of continuing the media stream playback without interruptions is enhanced.

### BRIEF DESCRIPTION OF THE DRAWINGS

In the following, the invention will be described in greater detail by means of preferred embodiments with reference to the accompanying drawings, in which
Figure 1 is a simplified block diagram of a system where the invention may be applied, and
Figure 2 is a diagram in accordance with an embodiment of the invention.

### DETAILED DESCRIPTION OF THE INVENTION

The invention may be applied in connection with various systems in which various streaming media data is delivered to users of terminal devices. Such a media data stream may include, for example, live and still video data, audio data and/or text data along with possibly needed control data. The media data may relate to various broadcasted programs of e.g. digital or analogue TV channels or programs or VOD (Video-On-Demand) programs or to various games, for example. Various systems and devices employed in delivering media content to users progress constantly, and consequently, the invention may need additional alterations in the future. All terms and expressions should therefore be interpreted in a broad sense, because their intention is only to illustrate, not to restrict, the invention.

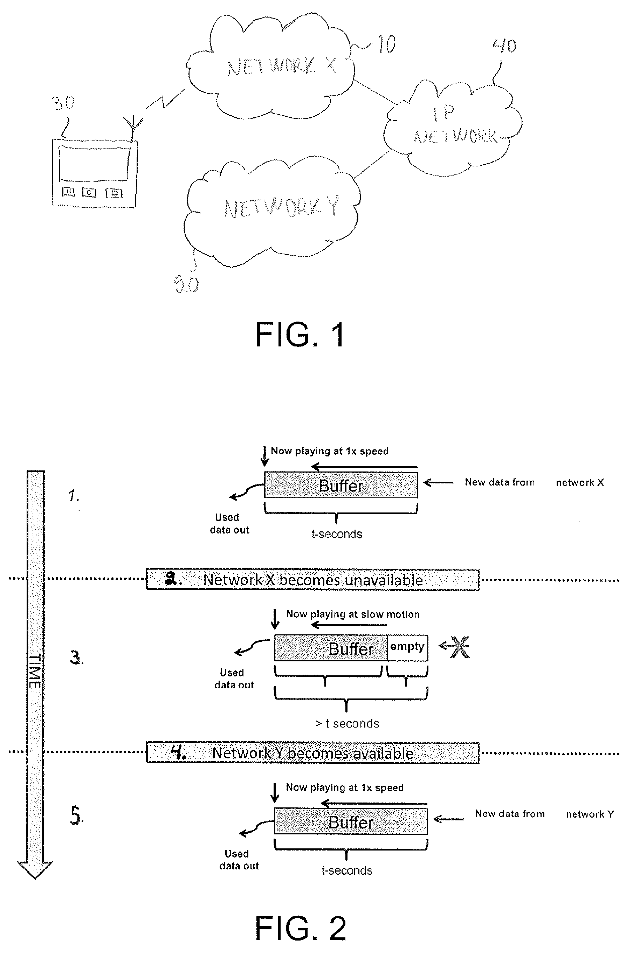

Figure 1 shows an example of a system in which the invention may be used. It is to be noted that, for the sake of clarity, the figure only shows those components that are relevant to the understanding of the invention. The system of Figure 1 comprises a terminal device 30. The terminal device 30 may be a mobile phone, a PDA device or a portable computer, a notebook computer or a personal computer equipped with a wireless LAN (Local Area Network) adapter, for example. The terminal device 30 may be capable of receiving media data via more than one type of wireless communication system. Thus, in addition to being able to receive media data via cellular and/or wireless local area network, the terminal device 30 may also be e.g. DVB-H (Digital Video Broadcasting - Handheld) capable device. Figure 1 further shows two networks 10 and 20 to which the terminal device 30 can connect via a wireless connection in order to at least receive media data. The networks 10, 20 may be any kind of networks via which terminal devices 30 may receive media data, such as WLAN (Wireless Local Area Network), WiMAX, GPRS (General Packet Radio Service) network, GSM (Global System for Mobile Communications) network, a third generation mobile communication system, such as UMTS (Universal Mobile Telecommunications System), a broadcast network, such as DVB-H, or a combination thereof. The two networks 10, 20 shown in the example of Figure 1 may be different kind of networks or the same kind of networks. In the example, the networks 10, 20 are connected to an IP network 40, such as the Internet, through which they may be further connected to other networks and media content providers (not shown) providing the media data stream to the terminal device, for example.

Figure 2 shows a diagram according to one possible embodiment. In phase 1 a terminal device is receiving media data stream via a wireless connection from network X and buffering the received media data stream into a buffer. The buffer is able to store t seconds of the incoming media data when the data is played back at normal (1x) speed. The buffered media data stream is played back by the terminal device and the media data already used may be discarded from the buffer. In phase 2 the connection to network X becomes unavailable, i.e. the terminal device cannot receive the media data stream from network X any more. According to an embodiment, the speed of the playback of the buffered media data stream is slowed down in response to the wireless connection becoming unavailable to the terminal device. This is exemplified in phase 3, which shows how the buffer does not receive any new data and is thus gradually emptied. However, since the data is played at a reduced speed (<1x), the playtime of the data in the buffer is increased and the total playtime of the data in the buffer, when full, is >t. As a result, the terminal device has more time during phase 3 to establish a new connection (or re-establish the previous connection) before the buffer becomes completely empty. According to an embodiment, the speed of the playback of the buffered media data stream may be restored back to a normal speed in response to the wireless connection becoming available again to the terminal device. Thus, when, for example, network Y becomes available in phase 4, the terminal device starts receiving new data into its buffer from network Y and may play back the data at normal (1x) speed again, as shown in phase 5 of Figure 2. When the new data stream is then received, depending on the time codes of the data stream in the buffer and the new data stream, either some parts of the data in the buffer may be discarded or played faster or the terminal device can just instantly begin to use the new data stream. This may or may not cause a single fast "glitch" to the audio and/or visual experience that the user of the terminal device is having.

According to an alternative embodiment, the slowing down of the speed of the playback of the buffered media data stream may be performed in response to a signal strength of the wireless connection experienced by the terminal device falling below a first predetermined threshold value. Thus, according to this embodiment, the strength of the signal received from the wireless connection may be monitored by the terminal device 30 and if the signal strength falls below a predetermined threshold value, the terminal device slows down the speed of the playback of the buffered media data stream. The term signal strength here generally refers to a quantity indicating the strength, level or quality of the signal received from the wireless connection. The threshold value of the signal strength used depends on the system to which the invention is applied and/or on the data buffer size, and it may be between 0 and 100% of a maximum or nominal signal strength value; e.g. 10%, 20% or 30% of the maximum strength. It is also possible to use more than one threshold value such that the playback of the media data stream is slowed down more each time a lower threshold value is reached. In other words, the playback of the media data stream could be slowed down only slightly if the signal strength is only slightly below the normal or maximum signal strength value and then slowed down more if the signal strength further decreases. According to an embodiment, the speed of the playback of the buffered media data stream is preferably restored back to the normal speed in response to the signal strength of the wireless connection experienced by the terminal device exceeding a second predetermined threshold value. The second predetermined threshold value may be the same as the first threshold value or a different value. Different values for the first and second thresholds could be used in order to cause some hysteresis to the switching on and off of the slowing down of the playback and thus to avoid a situation in which the playback speed fluctuates constantly.

The altering of the speed of the playback of the buffered media data stream according to any of the above embodiments may be performed in connection with a handover from one network, e.g. network X 10, to another network, e.g. network Y 20 or back to network X 10, providing the wireless connection to the terminal device 30. In this context a handover should be understood to also cover a situation in which the mobile device 30 first loses an existing connection to a network 10 or 20 and then re-establishes the connection to the same network 10 or 20. Thus, the slowing down and restoring of the speed of the playback could be performed in close connection with handover execution of the terminal device. For example, if signal strength values are used as a condition for the altering of the speed of the playback, the threshold values could be the same as the ones that might be used for handover preparation and execution. One possibility is to slow down the speed of the playback and start preparations for a handover when the signal strength of the wireless connection falls below a predetermined threshold value and then restore the playback speed to normal when handover is executed or restore the playback speed to normal and cancel the handover preparations if the signal strength relating to the existing connection goes above a predetermined threshold. Again, these threshold values may be the same or different values. Different values, such that the latter threshold value is higher, are preferably used in order to avoid the ping-pong effect of the handover. In case signal strength values are not available or not used for the playback speed altering and handover execution and the terminal device is in such a position that a certain network 10 or 20 is intermittently available and unavailable to the terminal device 30, it might be suitable to set a time limit for re-establishing a connection back to the same network from which a connection was lost such that the terminal device will not re-establish a connection to the same network before the set time, e.g. 5 s, has passed. On the other hand, if a new network becomes available after a previous connection has become unavailable, a handover into the new network could be executed immediately when possible.

According to an embodiment, when the media data stream comprises at least audio data, the slowing down of the speed of the playback of the buffered media data stream is preferably performed by retaining a pitch of the audio data substantially unchanged. By keeping the pitch of the audio data unchanged, the negative effect of the playback speed change on the listening experience of the user of the terminal device can be diminished. Several known methods for keeping the pitch of the audio data unchanged despite the playback speed change exists and thus no detailed instructions for the implementation thereof need to be given here.

How much the playback of the media data stream is slowed down in the various embodiments described above depends on the particular system and environment in which the invention is implemented. Also the content of the media data may set limits to an acceptable amount of slowing down. Generally, the amount of slowing down may be any value between 0 and 100 % of the normal playback speed (1x), for instance, 0.3x, 0.4x, 0.5x or 0.6x.

The terminal device 30 used in connection with the various embodiments may be any kind of terminal device which is able to receive a media data stream and play it back to the user of the device. Such a terminal device preferably comprises at least a receiving unit for receiving a media data stream from a wireless connection, a buffering unit for buffering the data and a playback unit for playing back the media data. Here the term unit generally refers to a physical or logical entity, such as a physical device or a part thereof or a software routine. The above-mentioned receiving, buffering and playback units and possible additional units may be physically separate units or implemented as one entity. The receiving unit in the terminal device implementing the invention may simply comprise suitable input or connections means enabling the terminal device 30 to receive data from the wireless connection through a separate wireless device. Thus, the terminal device 30 does not necessarily comprise in itself means for wireless communication but may instead use a separate wireless device for receiving the media data stream from the wireless connection. The playback unit preferably comprises a media player capable of playing the media stream and suitable output means, such as a display for video reproduction and/or one or more loudspeakers for audio reproduction, and input means, such as a keyboard or push buttons, for enabling the user of the device to control the operation of the device. In the embodiments using the strength of the received signal as a condition for the altering of the speed of the playback, unit or device, such as a radio part or a radio receiver, either within the terminal device 30 or separate from it which is responsible for providing the wireless connection for the terminal device, may provide some kind of signal strength information for the playback unit so that the playback unit may make the necessary decisions for altering the speed of the playback according to the various embodiments. In the embodiments where the connection availability is used as a condition for the altering of the speed of the playback, such unit or device which is responsible for providing the wireless connection for the terminal device may provide information on the state of the connection (e.g. available/not available) to the playback unit so that the playback unit can make the necessary decisions for altering the speed of the playback according to the various embodiments.

The above-described functionality according to any one of the above embodiments, or a combination thereof, may be implemented at least partly by means of suitable software provided in one or more computers or corresponding digital signal processing (DSP) equipment, for example. Such a computer or digital signal processing equipment preferably comprises at least a working memory (RAM) providing a storage area for arithmetical operations and a central processing unit (CPU), such as a general-purpose digital signal processor. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of the microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the invention further preferably comprises suitable input means for receiving data, and output means for outputting data. It is also possible to use a specific integrated circuit or circuits, or discrete electric components and devices for implementing the functionality according to any one of the embodiments.

The above-described functionality according to any one of the above embodiments, or any combination thereof, may be implemented in existing system elements, such as various terminal devices, and/or by using separate dedicated elements or devices in a centralized or distributed manner. Present terminal devices, such as mobile phones, media player devices and personal computers typically comprise one or more processors and a memory that can be readily utilized to implement the functions according to the various embodiments. Thus, all modifications and configurations required for implementing an embodiment of the invention e.g. in existing terminal devices may be performed as software routines, which may be implemented as added or updated software routines. If the functionality of the invention is implemented by software, such software can be provided as a computer program product comprising computer program code which, when run on a computer, causes the computer or a corresponding arrangement to perform the functionality according to the invention, as described above. Such a computer program code may be stored on a computer readable medium, such as suitable memory means, e.g. a flash memory or a disc memory from which it is loadable to the device or devices executing the program code. In addition, such a computer program code implementing the invention may be loaded to the device or devices executing the computer program code via a suitable data network, for example, and it may replace or update a possibly existing program code.

It is apparent to a person skilled in the art that as technology advances the basic idea of the invention may be implemented in a variety of ways. The invention and the embodiments thereof are thus not restricted to the above-described examples, but they may vary within the scope of the claims.

## Claims

1. A method for streaming media playback, the method comprising:
receiving a media data stream by a terminal device (30) via a wireless connection;
buffering the received media data stream;
playing back the buffered media data stream by the terminal device (30); and
altering the speed of the playback of the buffered media data stream, **characterized in that** the altering of the speed of the playback of the buffered media data stream comprises:
slowing down the speed of the playback of the buffered media data stream a) in response to the wireless connection becoming unavailable to the terminal device (30), or b) in response to the signal strength of the wireless connection experienced by the terminal device (30) falling below a first predetermined threshold value.

2. The method of claim 1, **characterized in that** the altering of the speed of the playback of the buffered media data stream, as per alternative a), further comprises:
restoring the speed of the playback of the buffered media data stream back to the normal speed in response to the wireless connection becoming available again to the terminal device (30).

3. The method of claim 1, **characterized in that** the altering of the speed of the playback of the buffered media data stream, as per alternative b), further comprises:
restoring the speed of the playback of the buffered media data stream back to the normal speed in response to the signal strength of the wireless connection experienced by the terminal device (30) exceeding a second predetermined threshold value.

4. The method of claim 3, **characterized in that** the first and second predetermined threshold values are different or the same.

5. The method of any one of claims 1 to 4, **characterized in that** the altering of the speed of the playback of the buffered media data stream is performed in connection with a handover from one network (10, 20) to another network (10, 20) providing the wireless connection to the terminal device (30).

6. The method of any one of claims 1 to 5, **characterized in that** the media data stream comprises at least video data and/or audio data.

7. The method of claim 6, **characterized in that** the media data stream comprises at least audio data, wherein the slowing down of the speed of the playback of the buffered media data stream is performed by retaining the pitch of the audio data substantially unchanged.

8. A terminal device comprising:
a receiver (30) configured to receive media data stream from a wireless connection;
a buffer (30) configured to buffer the received media data stream;
playback (30) means configured to play back the buffered media data stream, and alter the speed of the playback of the buffered media data stream, **characterized in that** the playback means are configured to slow down the speed of the playback of the buffered media data stream a) in response to the wireless connection becoming unavailable, or b) in response to the signal strength of the wireless connection falling below a first predetermined threshold value.

9. The terminal device of claim 8, **characterized in that** the playback means are configured, as per alternative a), to:
restore the speed of the playback of the buffered media data stream back to the normal speed in response to the wireless connection becoming available again.

10. The terminal device of claim 8, **characterized in that** the playback means are configured, as per alternative b), to:
restore the speed of the playback of the buffered media data stream back to the normal speed in response to the signal strength of the wireless connection exceeding a second predetermined threshold value.

11. The terminal device of claim 10, **characterized in that** the first and second predetermined threshold values are different or the same.

12. The terminal device of any one of claims 8 to 11, **characterized in that** the playback means are configured to perform the altering of the speed of the playback of the buffered media data stream in connection with a handover from one network (10, 20) to another network (10, 20) providing the wireless connection.

13. The terminal device of any one of claims 8 to 12, **characterized in that** the media data stream comprises at least video data and/or audio data.

14. The terminal device of claim 13, **characterized in that** the media data stream comprises at least audio data, wherein the playback means are configured to perform the slowing down of the speed of the playback of the buffered media data stream by retaining the pitch of the audio data substantially unchanged.

15. A computer program product comprising computer program code, wherein the execution of the program code in a computer causes the computer to carry out the steps of:
receiving a media data stream via a wireless connection;
buffering the received media data stream;
playing back the buffered media data stream; and
altering the speed of the playback of the buffered media data stream, **characterized in that** the altering of the speed of the playback of the buffered media data stream comprises:
slowing down the speed of the playback of the buffered media data stream a) in response to the wireless connection becoming unavailable, or b) in response to the signal strength of the wireless connection falling below a predetermined threshold value.
